# EUROPÄISCHE PATENTSCHRIFT

(11) **EP 0 575 936 B1**
(45) Veröffentlichungstag und Bekanntmachung des Hinweises auf die Patenterteilung: **21.08.1996**
(21) Anmeldenummer: 93109866.9
(22) Anmeldetag: 21.06.1993
(51) Int. Cl.: B62D 53/08

(54) **Verfahren und Vorrichtung zur elektronischen Koppelkraftregelung bei mehrteiligen Fahrzeugen**
Method and device for the electronic controlling of the coupling force of multi-part vehicles
Méthode et dispositif pour la commande électronique de la force d'accouplement de véhicules composés de plusieurs parties

(30) Priorität: 26.06.1992 DE 4220991
(43) Veröffentlichungstag der Anmeldung: 29.12.1993
(73) Patentinhaber: KNORR-BREMSE SYSTEME FÜR NUTZFAHRZEUGE GmbH, 80809 München (DE)
(72) Erfinder: Gerum, Eduard, Dr., D-82 Rosenheim (DE)

(56) Entgegenhaltungen:
- EP-A- 0 386 939

## Beschreibung

Die vorliegende Erfindung befaßt sich mit einem Verfahren und einer Vorrichtung zur elektrischen Koppelkraftregelung bei mehrteiligen Fahrzeugen, insbesondere bei Sattelkupplungen eines Sattelschleppers, bei dem hohe Schubkräfte während des Bremsvorganges auftreten. Diese Erscheinung wird dann zu einem besonderen Problem, wenn die Achse des Zugfahrzeugs nicht parallel zur Achse des gezogenen Fahrzeugs steht.

Eine derartige Koppelkraftregelung ist phänomenologisch aus der DE-OS 27 52 641 bekannt. In dieser Druckschrift wird eine Deichselkraftregeleinrichtung beschrieben, die für die Fahrstabilität des Wagenzuges nur positive, durch Auflaufen des Anhängers entstehende Deichselkräfte mißt und einer weiteren elektronischen Regeleinrichtung zuführt. Zu diesem Zweck befindet sich zwischen dem Zugfahrzeug und dem Anhänger ein Schwellwertgeber, der die positiven Deichselkräfte mißt und die Ergebnisse einer Auswertelogik zuführt. Die Auswertelogik erzeugt dann aufgrund des positiven Deichselkraftsignals Regelbefehle, die den Bremsdrucksteuerventilen im Zugwagen zugeführt werden.

Bei dieser bekannten Deichselkraftregelung wird lediglich dann ein Regeleingriff vorgenommen, wenn positive Deichselkräfte auftreten, um dadurch die Gefahr des Einknickens des Wagenzuges an der Kupplung zu vermeiden. Als nachteilig wird an dieser Deichselkraftregelung empfunden, daß lediglich die Kräfte in Fahrtrichtung bei Geradeausfahrt berücksichtigt werden, jedoch nicht jene Kräfte, die quer zur Fahrtrichtung auftreten, wenn die Achse des Zugfahrzeugs einen Winkel mit der Mittelachse des gezogenen Fahrzeugs einnimmt. Diese Querkräfte sind jedoch entscheidend für die Stabilität des gesamten Wagenzuges während des Bremsvorgangs in einer vorbeschriebenen Situation.

Ferner wurden in der vergangen Zeit eine Fülle von Arbeiten (siehe die EP-A-0386939) der Öffentlichtkeit vorgestellt, die das Problem der Koppelkraftregelung bei mehrteiligen Wagenzügen beschreiben, um durch mehr oder weniger aufwendige Regeleinrichtungen die Schwierigkeiten in den Griff zu bekommen. Wesentlich ist dabei stets, daß an der Deichsel- oder Sattelkupplung eine Sensierung der Koppelkräfte stattfindet. Die bisher bekannten brauchbaren, derartigen Einrichtungen beinhalten, soweit bekannt, stets eine sogenannte komplette Sensierung der Kupplung. Das bedeutet beispielsweise beim Deichselanhänger einen Analogwert für die Zug- und Druckkraft in Fahrtrichtung. Beim Sattelauflieger dagegen wird üblicherweise in drei Komponenten gemessen, d.h. sowohl die Zug- als auch die Druckkraft in Fahrtrichtung und die Kraft quer zur Fahrtrichtung und die Vertikalkraft, die die Last an der Sattelkupplung darstellt. Mit diesen Sensorsignalen liegt im Prinzip eine optimale Möglichkeit vor, die Kopplungskraft zu regeln. Hierbei ergeben sich allerdings nicht unerhebliche technische Schwierigkeiten bei der Darstellung der Sensierung, insbesondere für die Kräfte in drei verschiedenen Komponenten, wie sie typischerweise bei Sattelkupplungen auftreten und ein erhebliches konstruktives Problem darstellen. Die Herstellungskosten für derartige Systeme sind ökonomisch nicht zu vertreten. Ferner sind diese Systeme für die robuste Anwendung, wie sie bei Nutzfahrzeugen typisch ist, ungeeignet. Die resultierenden Kräfte an der Fahrzeugkupplung zwischen Zugmaschine und zu ziehendem Fahrzeug werden durch einen schlechten Wartungszustand im gezogenen Fahrzeug und einer evtl. im Neuzustand nicht vorhandenen optimalen Auslegung der Bremse verursacht. Dies führt einerseits zu Stabilitätsproblemen und andererseits zu ungleichmäßigen Abnutzungserscheinungen der Bremsbeläge. Infolge zu hoher Schubkräfte während des Bremsvorgangs wird die Antriebsachse des Zugfahrzeuges zur Seite gedrückt. Bei Deichselanhängern tritt zusätzlich das Problem des Einknickens des Drehschemels auf. Für den Fahrkomfort ist dieser Vorgang ebenfalls von Nachteil. Ein weiterer erheblicher Nachteil besteht darin, daß die Bremse des Zugfahrzeugs überlastet wird, d.h. einen zu hohen Verschleiß hat. Dadurch werden die Stillstandzeiten des wesentlich teureren Zugfahrzeugs unzulässig hoch und die zeitliche Sequenz der Erneuerung der Bremsbeläge in nicht zu vertretendem Maße zu kurz.

Daher ist es Aufgabe der vorliegenden Erfindung, ein Verfahren und eine Vorrichtung bereitzustellen, die in der Lage ist, eine einfache und kostengünstige Koppelkraftregelung für Kupplungen zwischen Zug und gezogenem Fahrzeug zu gewährleisten, indem der sensorische Aufwand der an der Kupplung auftretenden Kräfte gering gehalten wird.

Diese Aufgabe wird erfindungsgemäß mit den Merkmalen der unabhängigen Patentansprüche 1 und 15 gelöst.

Gemäß des Oberbegriffs des Anspruchs 1 wird erfindungsgemäß ein Verfahren zur elektrischen Koppelkraftregelung bei Kupplungen, insbesondere bei Sattelkupplungen eines Sattelschleppers mit einem Mikrocomputer und einem Druckkraft-Sensor an der Kupplung vorgeschlagen, das sich dadurch auszeichnet, daß dem Mikrocomputer neben anderer wichtiger Parameter, wie beispielsweise dem Lenkwinkel, der Geschwindigkeit oder der Hinterachslast ein analoger Wert der Druckkraft in Fahrtrichtung mittels eines Druckkraft-Sensors an der Kupplung zugeführt wird, um daraus die Querkraft-Komponente (Q) an der Kupplung zu berechnen.

Die entsprechende Vorrichtung zur Durchführung des erfindungsgemäßen Verfahrens beinhaltet u.a. einen Mikrocomputer, einen Druckkraft-Sensor an der Kupplung, einen Lenkwinkel-Sensor, einen Geschwindigkeits-Sensor und einen Hinterachslast-Sensor. Diese erfindungsgemäße Vorrichtung zeichnet sich dadurch aus, daß der Druckkraft-Sensor einen analogen Wert der Druckkraft in Fahrtrichtung liefert, aus dem mittels eines eingespeicherten Programms im Mikrocomputer die Querkraftkomponente (Q) ermittelt wird.

Von besonderem Vorteil des erfindungsgemäßen Verfahrens ist das Grundkonzept, im Grund nur eine veränderliche Kraft in Fahrtrichtung zu messen und nicht, wie üblich, die Vertikalkraft an der Kupplung für den Fall eines Sattelschleppers.

Besonders vorteilhaft wirkt sich bei der vorliegenden Erfindung auch die erfinderische Maßnahme aus, den Lenkwinkel (β), der in jedem modernen Nutzfahrzeug ohnehin gemessen wird, dem Mikrocomputer zugeführt wird, um damit weitere Berechnungen anzustellen.

Ferner ist es vorteilhaft, daß dem Mikrocomputer zuzuführende Geschwindigkeitssignal direkt vom Geschwindigkeit-Sensor des Tachometers abzunehmen oder vom Geschwindigkeits-Sensor eines evtl. vorhandenen ABS-Systems.

Zur kompletten Regelung der Bremsverhältnisse ist es ebenfalls notwendig bzw. vorteilhaft die Achslast des ziehenden und/oder des gezogenen Fahrzeugs zu messen und das erzeugte Signal dem Mikrocomputer zuzuführen.

So ergibt es sich beispielsweise in vorteilhafter Weise, daß aus dem Lenkwinkel-Signal direkt der Verlauf des Knickwinkels (α) zwischen Zugfahrzeugachse und der Achse des gezogenen Fahrzeugs ermittels werden kann. Ferner ist es erfindungsgemäß möglich, mit dem ohnehin vorhandenen Geschwindigkeits-Signal den Verlauf des Wagenzugs zu berechnen.

Mit den vorhandenen Meßwerten des Lenkwinkels (β) und dem vorhandenen Wegverlauf ist somit die resultierende Querkraft-Komponente (Q) mühelos zu berechnen. Insgesamt kann aus dem Wegverlauf, dem Knickwinkel (α) und der resultierenden Querkraft-Komponente (Q) eine Korrektur des Bremsdefizits berechnet werden und das entsprechende Korrektur-Signal wird mindestens einem Steuerungsorgan des Bremsystems zugeführt.

Weitere erfindungsgemäße Merkmale ergeben sich aus den Unteransprüchen.

Anhand der Zeichnungen wird nunmehr die vorliegende Erfindung im einzelnen beschrieben. Es zeigen
- Fig.1: ein Blockschaltbild der erfindungsgemäßen Vorrichtung;
- Fig.2: eine vereinfachte Darstellung eines Wagenzuges mit einem Zugfahrzeug (20) und dem gezogenen Fahrzeug (21);
- Fig.3: eine schematische Darstellung des Informationsflusses der Sensoren (4,5) und das Berechnungsschemas des Bremsdefizits;
- Fig.4: ein Flußdiagramm der Informationen der Druckkraft in Längsrichtung (2) und der Hinterachslast-Sensierung (6) bis zur Drucksteuerung der Bremsanlage des Anhängers (21);
- Fig.5: ein Flußdiagramm der Informationen vom Schwellwert-Sensor (2) der Zugkraft an der Kupplung (3) bis zur Steuerung des Druckes für die Anhängerbremse.

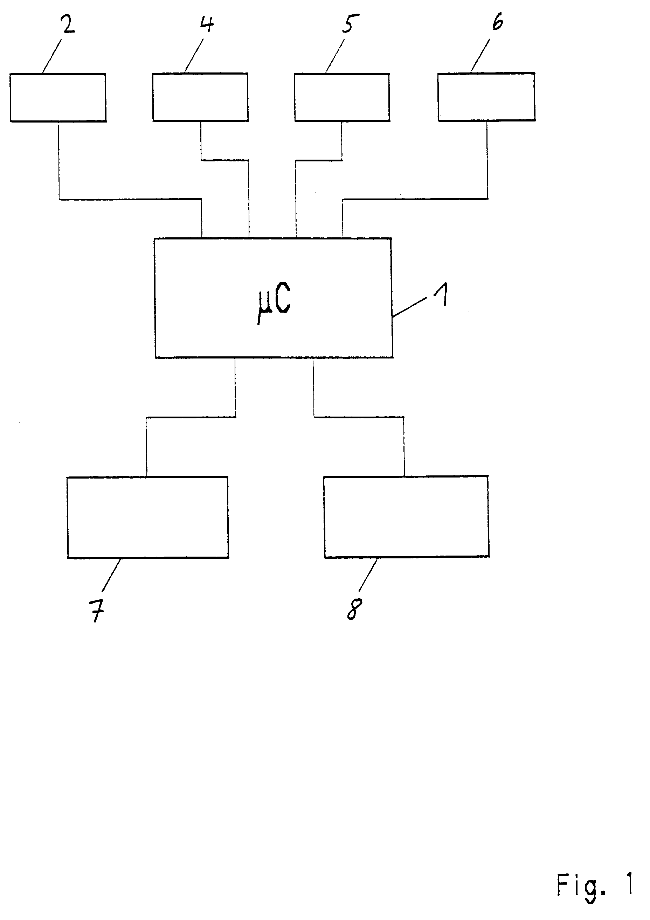

In der Fig.1 ist ein Blockschaltbild der erfindungsgemäßen Vorrichtung dargestellt, die das erfindungsgemäße Verfahren durchführen kann. Hiernach werden den Mikrocomputer 1 verschiedene Sensorsignale zugeführt. Im vorliegenden Ausführungsbeispiel werden diese Sensorsignale von einem Druckkraft-Sensor 2 an der Kupplung 3 erzeugt. Der Druckkraft-Sensor 2 an der Kupplung 3 liefert jedoch nicht wie üblich ein kontinuierliches analoges Meßsignal, sondern lediglich ein von einem vorbestimmten Schwellwert an ein analoges Signal, das ausreicht, um alle weiteren Berechnungen unter Zuhilfenahme weiterer Parameter durchzuführen. Der Druckkraft-Sensor 2 kann beispielsweise aus einem Dehnungsmeßstreifen, der hier nicht gezeigt ist, bestehen oder aber auch einer Deichsellast aus einem einfachen Schalter, der dann eingeschaltet wird, wenn eine bestimmte Druckkraft in einer vorbestimmten Richtung auf die Kupplung 3 einwirkt. Selbstverständlich sind auch andere Ausführungsarten eines Druckkraft-Sensors denkbar, so daß hierauf nicht im einzelnen eingegangen wird.

Für den Fall eines Zentralachsanhängers ist erfindungsgemäß keine Vertikalkraftsensierung an der Kupplung notwendig. Im übrigen wird der Schwellwert der Druckkraft in Fahrtrichtung wie beim Deichselanhänger im Zugfahrzeug an der Kupplung gemessen.

Bei einem Sattelauflieger befindet sich der Sensor an der Sattelkupplung des Zugfahrzeugs und nimmt dort die Druckkraft in Fahrtrichtung auf. Für diesen Fall kann der Druckkraft-Sensor 2 an einer Seite der Sattellagerung 3 mit einer besonderen Vorrichtung, die hier im einzelnen nicht beschrieben werden soll, befestigt werden.

Das Lenkwinkelsignal kann von einem Wegaufnehmer, der fest mit der Lenkstange des Lenkrades gekoppelt ist, abgegriffen werden. Dieses Signal erfordert in der Regel keine zusätzliche Signalerzeugungseinrichtung, da diese in jedem modernen Fahrzeug bereits vorhanden ist. Ebenso wird dem Mikrocomputer 1 ein Geschwindigkeitssignal zugeführt, das sowohl direkt vom Tachometer als auch vom ABS-System abgenommen werden kann. Somit ist es auch für diese Parametermessung nicht notwendig, eine zusätzliche Meßeinrichtung für die Geschwindigkeit des Fahrzeugs zur Verfügung zu stellen. Aus der gemessenen Geschwindigkeit kann unmittelbar die Berechnung des Wegverlaufs des Fahrzeugs erfolgen.

Als weiteres Beispiel für die Berechnung des Bremsdefizits und schließlich zur Steuerung des Steuerdrucks für die Anhängerbremse ist ein Hinterachslast-Sensor 6 vorgesehen, der ein der Hinterachslast entsprechendes Signal dem Mikrocomputer 1 zuführt. Dieser Sensor 6 kann darin bestehen, daß der Druck der Luftfederung der Hinterachse gemessen wird, aus dem sich wiederum die Achslast errechnen läßt.

Die Befehle des Mikrocomputers 1 werden dann den entsprechenden Steuereinrichtungen 7,8 der Zugmaschine 20 bzw. des gezogenen Fahrzeugs 21 zugeführt, die den Bremsdruck der einzelnen Subsysteme regelt.

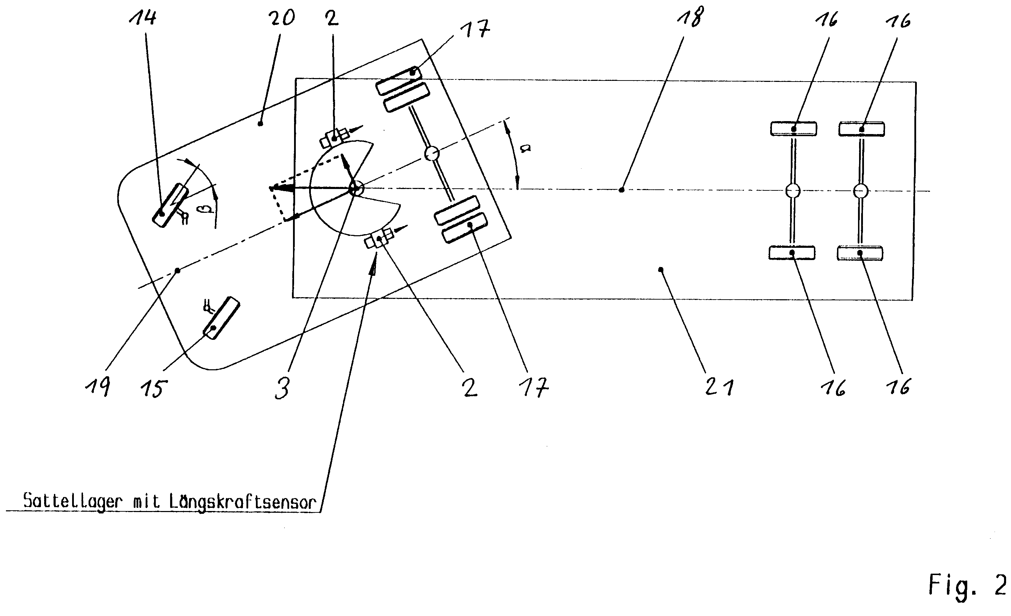

Die Fig.2 zeigt eine vereinfachte Darstellung eines Sattelschleppers, der im wesentlichen aus dem Zugfahrzeug 20 und dem darauf aufliegenden Auflieger 21 besteht. Die Hinterräder 17 der Zugmaschine 20 sind in der Regel nicht lenkbar und starr mit der Achse über ein Differential-Getriebe verbunden. Das gleiche gilt für die Hinterräder 16 des Aufliegers 21. Die Mittelachse 18 des Aufliegers führt durch den Mittelpunkt der Kupplung 3 und liegt im Normalfall für den Fall des Geradeausfahrens parallel mit der Mittelachse des Zugfahrzeugs 20.

Bei einer Kurvenfahrt werden zunächst die Vorderräder 15 der Zugmaschine 20 um einen bestimmten Winkel (β) verschwenkt, so daß die Mittelachse 19 der Zugmaschine 20 mit der Mittelachse 18 des Aufliegers 21 einen Winkel (α) bildet, der proportional dem Schwenkwinkel (β) der Vorderräder 15 des Zugfahrzeugs 20 ist. Diese Beziehung zwischen dem Schwenkwinkel (β) und dem Knickwinkel (α) unter Berücksichtigung des Wegverlaufs kann erfindungsgemäß dazu benutzt werden, die Querkomponente Q und die Komponente der Längskraft (L) an dem Kupplungsmittelpunkt 3 aufgrund des gemessenen Wertes der Druckkraft in Fahrtrichtung auf einfache Weise mit Hilfe eines gespeicherten Programms im Mikrocomputer 1 ermittelt werden. Der Knickwinkel (α) errechnet sich also aus dem Lenk- oder Schwenkwinkel (β) und dem Wegverlauf des Fahrzeugs, welcher Wegverlauf sich aus dem Geschwindigkeitsverlauf aufgrund der Geschwindgkeitsmessung ergibt.

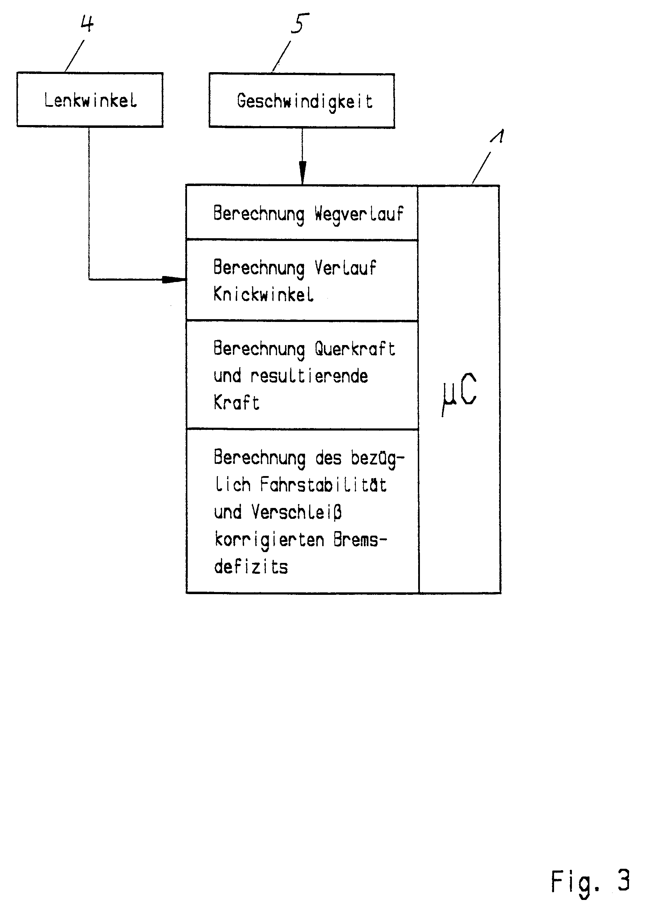

In der Fig.3 wird der prinzipielle Informationsfluß von zwei Sensoren 4,5 gezeigt, wobei die Zufuhrlinien der Information der Einfachheit halber nicht direkt auf den Mikrocomputer 1, sondern auf die entsprechenden Blöcke der jeweiligen Berechnungsart geführt werden. Der Mikrocomputer 1 steht mit allen Berechnungsblöcken in Verbindung und gilt somit als übergeordnete Einheit. Wie bereits oben erwähnt wurde, wird das Signal des Lenkwinkel-Sensors 4 dem Computer 1 zugeführt, mit dessen spezifischem Programm die Berechnung des Verlaufs des Knickwinkels erfolgt.

Ferner wird dem Mikrocomputer 1 das Geschwindigkeitssignal des Geschwindigkeits-Sensors 5 zugeführt, der wiederum mit einem entsprechenden Subprogramm die Berechnung des Wegverlaufs des Fahrzeugs durchführt. Nachdem die Berechnung des Wegverlaufs und die Berechnung des Verlaufs des Knickwinkels (α) stattgefunden haben, kann die Berechnung der resultierenden Querkraft-Komponente (Q) auf die Kupplung 3 erfolgen und hernach die Berechnung des bezüglich der Fahrstabilität korrigierten Bremsdefizits.

Entsprechend dem Wert des errechneten Bremsdefizits gibt der Mikrocomputer 1 ein Steuersignal an die betreffenden Steuerorgane 7,8, die letztlich den Bremsdruck an den einzelnen Rädern der Fahrzeuge des Wagenzuges steuern.

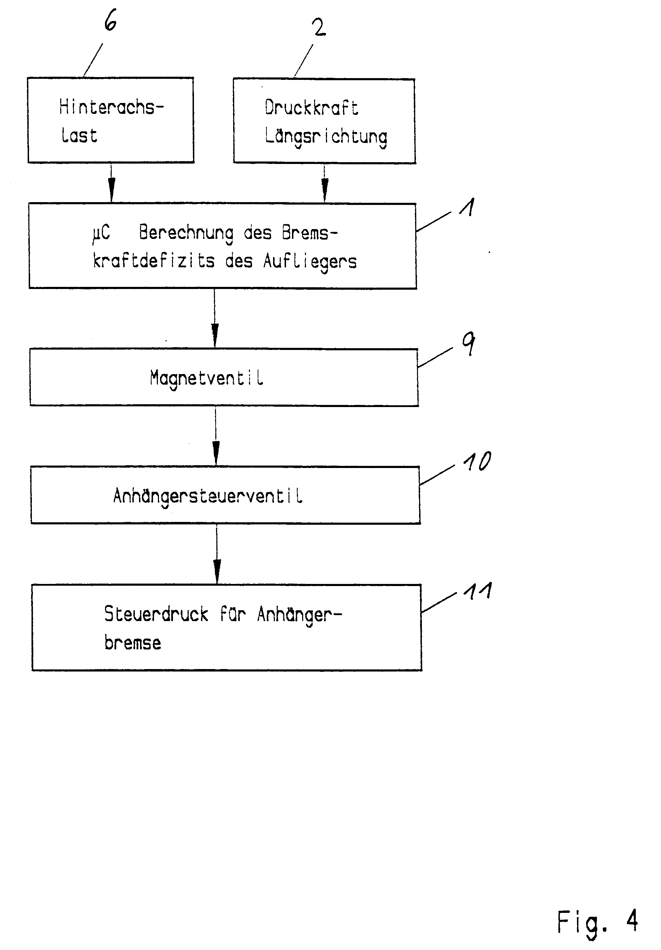

In Fig.4 ist der Informationsfluß der Sensoren 2,6 über den Mikrocomputer 1 bis hin zur Steuerung 11 des Druckes für die Anhängerbremse ersichtlich. In diesem Falle wird die Druckkraft in Längsrichtung mit dem Druckkraft-Sensor 2 gemessen und dem Mikrocomputer 1 zugeführt. Ferner wird dem Mikrocomputer 1 vom Hinterachslast-Sensor 6 ein entsprechendes Signal zugeführt, so daß in ähnlicher Weise, wie vorher beschrieben wurde, das Bremskraftdefizit des Aufliegers 21 berechnet wird. Aufgrund eines vom Mikrocomputer 1 ausgegebenen Steuersignals 1 wird dann ein Magnetventil 9 betätigt, das wiederum ein Anhängersteuerventil 10 ansteuert und letztlich den Steuerdruck für die Anhängerbremse liefert.

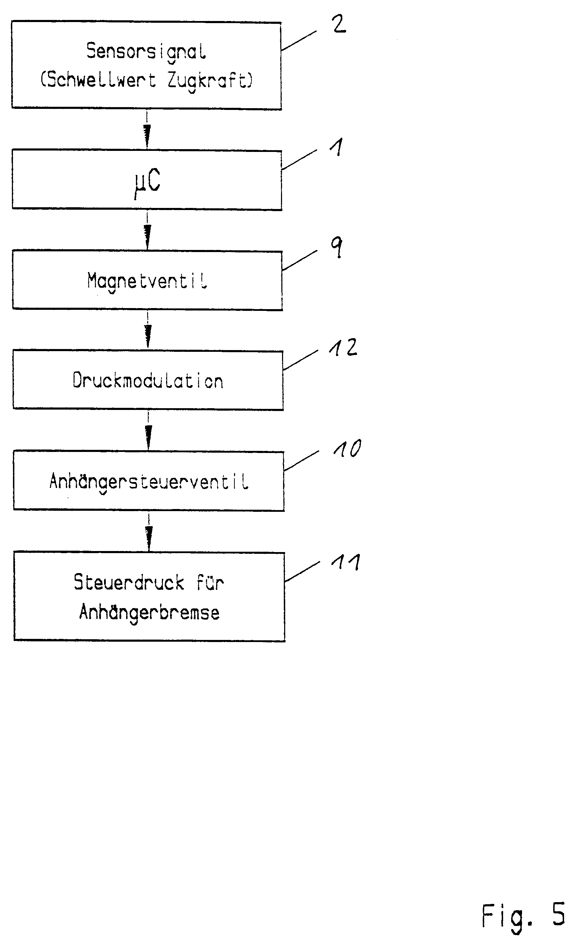

In der Fig.5 ist der Informationsfluß im Falle einer Zugkraft an der Kupplung 3 dargestellt. Der Kraftsensor 2 liefert ein Signal bei Erreichen eines Schwellwertes an den Mikrocomputer 1, der wiederum ein Magnetventil 9 aufgrund von vorherigen Berechnungen ansteuert.

Der Druck, der aus dem Magnetventil strömt wird mit einer entsprechenden Vorrichtung 12 moduliert und dann dem Anhängersteuerventil 10 zugeführt, das wiederum den Steuerdruck für die Anhhängerbremse liefert.

Sinn und Zweck des oben beschriebenen Systems sind im wesentlichen zwei Funktionen, nämlich die der Verschleißregelung und die der Stabilitätsregelung während des Fahrbetriebs. Die vorliegende Erfindung geht also davon aus, daß die damit zusammenhängenden Probleme erheblich reduziert werden können, wenn die Sensierung der Zug- bzw. Druckkräfte in den entsprechenden Fällen entscheidend vereinfacht werden kann. Im vorliegenden Fall der Erfindung wird also anstatt einer kontinuierlichen Zug-/Druckkraftmessung in Fahrtrichtung, z.B. beim Deichselanhänger nur ein Schwellwert der Druckkraft in Fahrtrichtung gefordert, d.h. statt einer analogen Meßgröße in Vorwärts- und Rückwärtsrichtung ist nunmehr nur noch eine Schaltmarke in Fahrtrichtung erforderlich. Beim Sattelauflieger wird die Reduzierung der Sensorik noch erheblich deutlicher. Auf die Sensierung der Zugkraft in Fahrtrichtung wird völlig verzichtet. Lediglich die Druckkraft in Fahrtrichtung ist erfindungsgemäß zu Sensieren. Daraus ergibt sich eine wesentliche Vereinfachung, nämlich, daß die Kräfte quer zur Fahrtrichtung nicht mittels eines Sensors an der Kupplung 3 gemessen werden, sondern einfach mit Hilfe eines Mikrocomputers 1 berechnet werden, was letztlich aus einer einzigen Messung des Schwellwertes der Druckkraft in Fahrtrichtung resultiert. Diese Berechnung ist im einfachsten Falle unter Zuhilfenahme des ohnehin in modernen Fahrzeugen gemessenen Lenkwinkels (β), aus dem der Wegverlauf des Fahrzeugs ermittelt wird, möglich.

Daraus ergibt sich bei einer Kurvenfahrt die Möglichkeit einer Kräftezerlegung, wodurch die für die Stabilität des Wagenzuges wichtige Komponente quer zur Fahrt ermittelt werden kann. Der Lenkwinkel (β) und der Weg bzw. Geschwindigkeitsverlauf des Zugfahrzeugs 20 können anderweitig leicht gemessen werden bzw. sind bereits bei anderen elektrischen Systemen im Zugfahrzeug 20 als gemessene Größen vorhanden. Die Last an der Sattelkupplung 3 wird ebenfalls nicht direkt an der Sattelkupplung gemessen.

Man kann in Zukunft davon ausgehen, daß Sattelfahrzeuge zumindest an der Hinterachse eine Luftfederung aufweisen. Dadurch wird auf einfache Weise die Möglichkeit eröffnet, durch Druckmessung im Luftbalg der Federung eine Größe für die Hinterachslast zu bekommen.

Durch die oben beschriebenen wesentlichen Vereinfachungen und Reduzierung der Sensierung ergeben sich vergrößerte Chancen, bei einem ökonomisch vertretbarem Aufwand eine Koppelkraftregelung herzustellen.

### Bezugszeichenliste

- 1: Mikrocomputer
- 2: Druckkraft-Sensor
- 3: Kupplung
- 4: Lenkwinkel-Sensor
- 5: Geschwindigkeits-Sensor
- 6: Hinterachslast-Sensor
- 7: Stellorgan (erstes)
- 8: Stellorgan (zweites)
- 9: Magnetventil
- 10: Anhängersteuerventil
- 11: Steuerdruck für Anhängerbremse
- 12: Druckmodulation
- 13:
- 14: erstes lenkbares Vorderrad
- 15: zweites lenkbares Vorderrad
- 16: Hinterräder des Sattelaufliegers
- 17: Hinterräder des Zugfahrzeugs
- 18: Mittelachse des Sattelaufliegers
- 19: Mittelachse des Zugfahrzeugs
- 20: Zugfahrzeug
- 21: Sattelauflieger

## Patentansprüche

1. Verfahren zur elektrischen Koppelkraftregelung bei Kupplungen, insbesondere bei Sattelkupplungen eines Sattelschleppers, mit :
- einem Mikrocomputer (1) und
- einem Druckkraft-Sensor (2) an einer Kupplung (3),
dadurch gekennzeichnet, daß dem Mikrocomputer (1) neben Parametern von anderen Sensoren (4,5,6) ein analoger Wert der Druckkraft mittels des Druckkraft-Sensors (2) an der Kupplung (3) in Fahrtrichtung zugeführt wird, um daraus die Querkraftkomponente (Q) an der Kupplung (3) zu berechnen.

2. Verfahren nach Anspruch 1, dadurch gekennzeichnet, daß dem Mikrocomputer (1) ein Lenkwinkel-Signal (β) vom Lenkwinkel-Sensor (4) zugeführt wird.

3. Verfahren nach Anspruch 1, dadurch gekennzeichnet, daß dem Mikrocomputer (1) ein Geschwindigkeitssignal vom Geschwindigkeits-Sensor (5) zugeführt wird.

4. Verfahren nach Anspruch 1, dadurch gekennzeichnet, daß dem Mikrocomputer (1) ein Hinterachslast-Signal vom Hinterachslast-Sensor (6) zugeführt wird.

5. Verfahren nach Anspruch 3, **dadurch gekennzeichnet**, daß aus dem Geschwindigkeits-Signal der Wegverlauf berechnet wird.

6. Verfahren nach Anspruch 5, **dadurch gekennzeichnet**, daß aus dem Lenkwinkel-Signal (β) und dem Wegverlauf der Knickwinkel (α) berechnet wird.

7. Verfahren nach einem der vorangegangenen Ansprüche, **dadurch gekennzeichnet**, daß aus dem Knickwinkel (α) und der Längskraft die resultierenden Querkraft-Komponente (Q) berechnet wird.

8. Verfahren nach einem der vorangegangenen Ansprüche, **dadurch gekennzeichnet**, daß aus der Längskraft, dem Wegverlauf, dem Knickwinkel (α) und der resultierenden Querkraft-Komponente (Q) eine Korrektur des Bremsdefizits berechnet wird und den Steuerorganen (7,8) zugeführt wird.

9. Verfahren nach einem der Ansprüche 3 und/oder 5 bis 8, **dadurch gekennzeichne**t, daß das Geschwindigkeitssignal vom Tachometer (5) geliefert wird.

10. Verfahren nach einem der Ansprüche 3 und/oder 5 bis 8, **dadurch gekennzeichnet**, daß das Geschwindigkeitssignal vom ABS-System geliefert wird.

11. Verfahren nach Anspruch 1 und 2, **dadurch gekennzeichnet**, daß der Lenkwinkel (β) duch die Stellung des Lenkrades ermittelt wird.

12. Verfahren nach Anspruch 1 und 4, **dadurch gekennzeichnet**, daß das Hinterachslast-Signal aus der Druckmessung der Luftfederung gewonnen wird.

13. Verfahren nach Anspruch 1, dadurch gekennzeichnet, daß die Berechnung des Bremskraftdefizits aus der Druckkraft (F_{D}) in Längsrichtung und der Hinterachslast erfolgt.

14. Verfahren nach Anspruch 1, daduch gekennzeichnet, daß erst nach Überschreiten eines vorbestimmten Schwellwertes ein analoger Wert der Druckkraft in Fahrtrichtung dem Mikro-Computer (1) zugeführt wird.

15. Vorrichtung zur Durchführung des nach Anspruch 1 beschriebenen Verfahrens mit :
- einem Mikrocomputer (1) und
- einem Druckkraft-Sensor (2) an der Kupplung (3);
- einem Lenkwinkel-Sensor (4);
- einem Geschwindigkeits-Sensor (5);
- einem Hinterachslast-Sensor (6),
gekennzeichnet durch
- den Druckkraft-Sensor (2), der einen analogen Wert der Druckkraft in Fahrtrichtung liefert, aus dem der Mikrocomputer (1) unter Berücksichtigung weiterer Sensorsignale die Querkraft-Komponente (Q) ermittelt.

16. Vorrichtung nach Anspruch 15, dadurch gekennzeichnet, daß der Druck-Sensor (2) in Fahrtrichtung erst nach Erreichen eines vorbestimmten Schwellwertes ein Signal dem Mikro-Computer (1) zuführt.

## Claims

1. Process for electrically controlling the coupling force of couplings, particularly fifth wheels of a semitrailer, with:
- a microcomputer (1) and
- a pressure force sensor (2) of a coupling (3),
characterised in that an analogue value of the force is fed to the microcomputer (1) by means of the force sensor (2) of the coupling (3) in the direction of travel, besides parameters from other sensors, in order to calculate from this the transverse force components (Q) at the coupling (3).

2. Process in accordance with claim 1, characterised in that a steering angle (β) from the steering angle sensor (4) is fed to the microcomputer (1).

3. Process in accordance with claim 1, characterised in that a speed signal from the speed sensor (5) is fed to the microcomputer (1).

4. Process in accordance with claim 1, characterised in that a rear-axle load signal from the rear-axle load sensor (6) to the microcomputer (1).

5. Process in accordance with claim 3, characterised in that the course is calculated from the speed signal.

6. Process in accordance with claim 5, characterised in that the articulation angle (α) is calculated from the steering angle (β) and the course.

7. Process in accordance with any of the preceding claims, characterised in that the resulting shearing force components (Q) are calculated from the articulation angle (α) and the longitudinal force.

8. Process in accordance with one of the preceding claims, characterised in that a correction of the brake deficit is calculated from the longitudinal force, the course, the articulation angle (α) and the resulting shearing force components and fed to the control members (7, 8).

9. Process in accordance with one of claims 3 and/or 5 to 8, characterised in that the speed signal is provided by the tachometer.

10. Process in accordance with one of claims 3 and/or 5 to 8, characterised in that the speed signal is provided by the ABS-system.

11. Process in accordance with claims 1 and 2, characterised in that the steering angle (β) is determined by the position of the steering wheel.

12. Process in accordance with claims 1 and 4, characterised in that the rear-axle load signal is obtained from the measurement of pressure of the pneumatic suspension.

13. Process in accordance with claim 1, characterised in that the calculation of the brake force deficit is carried out from the force (F_{D}) in the longitudinal direction and the rear-axle load.

14. Process in accordance with claim 1, characterised in that an analogue value of the force in the direction of travel is only fed to the microcomputer after exceeding a predetermined threshold value.

15. Device for carrying out the process described in accordance with claim 1 with:
- a microcomputer (1) and
- a force sensor (2) of the coupling (3);
- a steering angle sensor (4);
- a speed sensor (5);
- a rear-axle load sensor (6),
characterised by
- the pressure force sensor (2) which provides an analogue value of the force in the direction of travel, from which, taking into account signals from other sensors, the microcomputer determines the transverse force components (Q).

16. Device in accordance with claim 15, characterised in that the pressure sensor (2) in the direction of travel only feeds a signal to the microcomputer (1) after reaching a predetermined threshold value.

## Revendications

1. Procédé pour la commande électrique de la force d'accouplement pour des dispositifs d'accouplement, en particulier pour les sellettes d'un semi-remorque, avec :
- un micro-ordinateur (1) et
- un détecteur de force de pression (2) sur un dispositif d'accouplement (3),
caractérisé en ce qu'une valeur analogique de la force de pression est amenée en plus de paramètres d'autres détecteurs (4, 5, 6) au micro-ordinateur (1) au moyen du détecteur de force de pression (2) sur le dispositif d'accouplement (3) dans le sens de la marche pour calculer, à partir de ces valeurs, la composante de la force transversale (Q) au dispositif d'accouplement (3).

2. Procédé selon la revendication 1, caractérisé en ce qu'un signal d'angle de direction (β) du détecteur d'angle de direction (4) est amené au micro-ordinateur (1).

3. Procédé selon la revendication 1, caractérisé en ce qu'un signal de vitesse du détecteur de vitesse (5) est amené au micro-ordinateur (1).

4. Procédé selon la revendication 1, caractérisé en ce qu'un signal de charge d'essieu arrière du détecteur de charge d'essieu arrière (6) est amené au micro-ordinateur (1).

5. Procédé selon la revendication 3, caractérisé en ce que l'espace parcouru est calculé à partir du signal de vitesse.

6. Procédé selon la revendication 5, caractérisé en ce que l'angle d'inflexion (α) est calculé à partir du signal de l'angle de direction (β) et de l'espace parcouru.

7. Procédé selon l'une des revendications précédentes, caractérisé en ce que la composante de force transversale résultante (Q) est calculée à partir de l'angle d'inflexion (α) et de la force longitudinale.

8. Procédé selon l'une des revendications précédentes, caractérisé en ce qu'une correction du déficit de freinage est calculée à partir de la force longitudinale, de l'espace parcouru, de l'angle d'inflexion (α) et de la composante de force transversale résultante (Q).

9. Procédé selon l'une des revendications 3 et/ou 5 à 8, caractérisé en ce que le signal de vitesse est fourni par l'indicateur de vitesse (5).

10. Procédé selon l'une des revendications 3 et/ou 5 à 8, caractérisé en ce que le signal de vitesse est fourni par le système ABS.

11. Procédé selon les revendications 1 et 2, caractérisé en ce que l'angle de direction (β) est déterminé par la position du volant.

12. Procédé selon les revendications 1 et 4, caractérisé en ce que le signal de charge de l'essieu arrière est obtenu à partir de la mesure de la pression de la suspension pneumatique.

13. Procédé selon la revendication 1, caractérisé en ce que le calcul du déficit de freinage est effectué à partir de la force de pression (F_{D}) dans le sens longitudinal et de la charge de l'essieu arrière.

14. Procédé selon la revendication 1, caractérisé en ce que ce n'est qu'après avoir dépassé une valeur de seuil prédéterminée qu'une valeur analogique de la force de pression dans le sens de la marche est amenée au micro-ordinateur (1).

15. Dispositif pour réaliser le procédé décrit selon la revendication 1 avec :
- un micro-ordinateur (1) et
- un détecteur de force de pression (2) au dispositif d'accouplement (3),
- un détecteur d'angle de direction (4),
- un détecteur de vitesse (5),
- un détecteur de charge d'essieu arrière (6),
caractérisé par
- le détecteur de force de pression (2), qui fournit une valeur analogique de la force de pression dans le sens de la marche à partir de laquelle le micro-ordinateur (1) détermine la composante de la force transversale (Q) en tenant compte d'autres signaux de détecteurs.

16. Dispositif selon la revendication 15, caractérisé en ce que le détecteur de force (2) dans le sens de la marche n'amène un signal au micro-ordinateur (1) qu'après avoir atteint une valeur de seuil prédéfinie.
